Europäisches Patentamt

European Patent Office

Office européen des brevets

(11) Veröffentlichungsnummer: **0 360 196**

**A1**

(12) ## EUROPÄISCHE PATENTANMELDUNG

(21) Anmeldenummer: **89117231.4**

(51) Int. Cl.5. **A47B 96/06 , A47K 1/09**

(22) Anmeldetag: **18.09.89**

(30) Priorität: **21.09.88 DE 3831968**

(43) Veröffentlichungstag der Anmeldung:
**28.03.90 Patentblatt 90/13**

(84) Benannte Vertragsstaaten:
**AT CH FR GB LI SE**

(71) Anmelder: **Pfahler, Rolf**
**Ferdinand-Hofmann-Strasse 54**
**D-6000 Frankfurt am Main 80(DE)**

(72) Erfinder: **Pfahler, Rolf**
**Ferdinand-Hofmann-Strasse 54**
**D-6000 Frankfurt am Main 80(DE)**

(74) Vertreter: **Meier, Robert, Dipl.-Ing.**
**Patentanwalt Dipl.-Ing. Robert Meier Auf dem**
**Mühlberg 16**
**D-6000 Frankfurt am Main 70(DE)**

(54) **Wandablage.**

(57) Eine Wandablage (1), vorzugsweise für Badezimmer, Toiletten bzw. Urinale o.dgl. ist so ausgebildet, daß eine fest mit einer Wand (2) verbindbare, im wesentlichen U-förmige Ablageanschlußleiste (14, 15, 16, 26) und eine leicht lösbar mittels einer Rastverbindung (30, 48, 50) damit verbindbare Ablage (40) beliebiger Ausladung (25), die als doppelwandiger, wenigstens vorn geschlossener Kastenträger ausgebildet ist, miteinander kombinierbar sind.

EP 0 360 196 A1

FIG.1

## Wandablage

Die Erfindung bezieht sich auf eine Wandablage, vorzugsweise für Badezimmer, Toiletten bzw. Urinale o.dgl.

Bisherige Wandablagen aus Keramik, eventuell aus Porzellan, sind in ihrer Form und Größe dem Waschbecken angepaßt, über denen sie an der Wand eines Badezimmers oder einer Toilette befestigt werden sollen. Ihre Breite entspricht der Breite des oder der Waschbecken und ihre Auslage ist begrenzt, so daß auf den bekannten Wandablagen meist nur wenige Toilettengegenstände aufgestellt werden können. Zur Ablage größerer Gegenstände, beispielsweise einer Aktentasche oder einer Einkaufstüte sind sie nicht vorgesehen und auch nicht geeignet.

Die bekannten Wandablagen werden über einem Waschbecken an der Wand festgeschraubt. Dafür sind an der Unterseite der Wandablage Ansätze oder Einbuchtungen vorgesehen, um Anlageflächen für die Köpfe der Befestigungsschrauben zu schaffen.

Zwar lassen sich bekannte Wandablagen ohne Schwierigkeiten auch an beliebigen Wänden ohne Beziehung zu ihren Waschbecken einsetzen, jedoch wirken sie dabei nicht nur unschön, sondern der geringe Platz, den sie zum Ablegen zur Verfügung stellen, ist so bemessen, daß sich ihr Anbringen in den seltensten Fällen lohnt.

Gleichwohl besteht jedoch - z.B. in Bedürfnisanstalten o.dgl. - ein Bedarf an ausreichend großen Wandablagen, etwa für Taschen, kleinerer Pakete oder Aktentaschen. In den genannten Räumen ist der Boden meist naß und verschmutzt, so daß sich ein Abstellen der genannten Gegenstände auf dem Boden verbietet. Die geschilderten bekannten Wandablagen sind jedoch zu klein und das Anbringen von Regalen oder einfachen Brettern verbietet sich, da diese für die geschilderte Verwendung schon aus hygienischen Gründen ungeeignet sind. Meist fehlen auch in Hotels und Pensionen genügend Ablageflächen für die auf Reisen mitgeführten Toilett-Artikel.

Dem gegenüber liegt der vorliegenden Erfindung die Aufgabe zugrunde, eine einfach herstellbare, wahlweise in beliebigen Längen und Ausladungen lieferbare, rasch montier- und demontierbare gewichtsmäßig leichte Wandablage mit verschieden großen Auslagen zu schaffen, die auch zum Anbringen an unebenen Wänden geeignet ist und auf der kleinere Pakete, Aktentaschen, Einkaufstüten sowie Toilett-Artikel o.dgl. abstellbar sind.

Gelöst wird diese Aufgabe durch eine fest mit einer Wand verbindbare, im wesentlichen U-förmige Ablageanschlußleiste und eine leicht lösbar mittels eines Drehgelenkes und einer Rastverbindung damit verbindbare Ablage verschiedener Ausladung, die als doppelwandiger, wenigstens vorn geschlossener Kastenträger ausgebildet ist.

Die erfindungsgemäß Wandablage kann in jeder beliebigen Länge und mit verschiedenen Ausladungen geliefert werden. Sie kann auch zum Nachrüsten an unebenen Wänden leicht eingesetzt werden. Sie ist so konstruiert, daß sie gewichtsmäßig leicht ist und eine Ausladung zwischen 20 und 30 cm haben kann. Die erfindungsgemäße Konstruktion hat den Vorteil, daß die Befestigungsmittel unsichtbar sind, so daß sich eine formschöne, für die zugedachte Verwendung in sanitären Räumen bestens geeignete Wandablage ergibt, die sich leicht reinigen und desinfizieren läßt und mit der sich vor allem ohne Schwierigkeiten maßgerechte und farblich dem Bad angepaßte Ablageflächen nachträglich schaffen lassen.

In einem ersten Ausführungsbeispiel wird die Wandablage direkt an eine ebene Wand geschraubt. Hierzu wird gemäß Anspruch 2 der Boden der Ablageanschlußleiste mittels Befestigungsschrauben an der Wand befestigt, die in einer waagerechten Linie auf der oder parallel zu der Mittellinie des Bodens angeordnet sind. Einzelheiten des Drehgelenkes und der Rastverbindung sind in den Ansprüchen 3 und 4 gekennzeichnet.

Weitere Einzelheiten des ersten Ausführungsbeispieles ergeben sich aus den Ansprüchen 5 bis 13.

Ein zweites Ausführungsbeispiel ist gekennzeichnet durch eine U-förmig ausgebildete Ausgleichsleiste, die mit ihrem Boden ausgleichend an der Wand aufliegt, und deren von der Wand wegweisenden waagerecht verlaufenden Schenkel eine Öffnungsweite aufweisen, die der Einsteckweite der Ablageanschlußleiste derart entspricht, daß ihr Boden und die an diesen anschließenden Endbereiche der oberen und unteren Wände dicht aber justierbar hineinpassen. Selbst wenn die Ausgleichsleiste an einer im wesentlichen schrägen Wand anliegt, läßt sich erfindungsgemäß die Ablageanschlußleiste derart justieren, daß die Wandablage, unabhängig von der Wand, gerade verläuft.

Im einzelnen sind im Boden der Ausgleichsleiste Durchstecklöcher vorgesehen, durch die die Befestigungsschrauben für die Ablageanschlußleiste hindurchragen. Oberhalb und unterhalb der Linie für die Befestigungsschrauben im Boden der Ablageanschlußleiste sind Schraublöcher für Justierschrauben vorgesehen, deren Enden auf dem Boden der Ausgleichsleiste aufstehen. Auf diese Weise ist es möglich, die Ausrichtung der Ablageanschlußleiste gegenüber der Ausgleichsleiste durch die Justierschrauben vorzunehmen und die Befestigung sowohl von der Ablageanschlußleiste wie auch der Ausgleichsleiste durch die Befestigungsschrauben vorzunehmen.

Wesentlich ist, daß gemäß Anspruch 17 die zwei bzw. drei Bestandteile der Wandablage, nämlich die Ablageanschlußleiste, die Ablage und die Ausgleichsleiste aus Metall oder Kunststoff stranggepreßt sind. Hierdurch ist es möglich, die Bestandteile der Wandablage nicht nur preiswert, sondern auch in beliebiger Länge herzustellen. Bei der Herstellung aus Kunststoff ist auf einfache Weise jede beliebige Farbgebung möglich.

Ein Kunstruktionsdetail ist in Anspruch 18 gekennzeichnet, wonach der seitliche Abschluß der Wandablage aus Blenden besteht, die in rechter und linker Ausführung in die Ablage eingesteckt werden können.

Es hat sich herausgestellt, daß eine normale Auslage der Wandablage gegenüber der Wand von 20 cm ausreicht. Ohne Schwierigkeiten kann jedoch die Wandablage auch mit einer Auslage von etwa 25 oder auch 30 cm hergestellt und geliefert werden.

Erfindungsgemäß ist ein vielfältig einsetzbares Zubehör für Bäder, Toiletten o.dgl. entwickelt worden, welches auch in Kombination mit handelsüblichen Waschtischen in Sanitärfarben ohne Schwierigkeiten eingesetzt werden kann.

Zwei Ausführungsbeispiele der Erfindung werden nachfolgend anhand der Zeichnung beschrieben. Es zeigt:

Fig. 1 eine Draufsicht auf eine Wandablage, und zwar links ein erstes und rechts ein zweites Ausführungsbeispiel,

Fig. 2 eine Ausgleichsleiste von der offenen Seite her,

Fig. 3 einen Schnitt entlang der Linie III/III in Fig. 1,

Fig. 4 eine Seitenblende und

Fig. 5 einen Schnitt entlang der Linie V/V in Fig. 1.

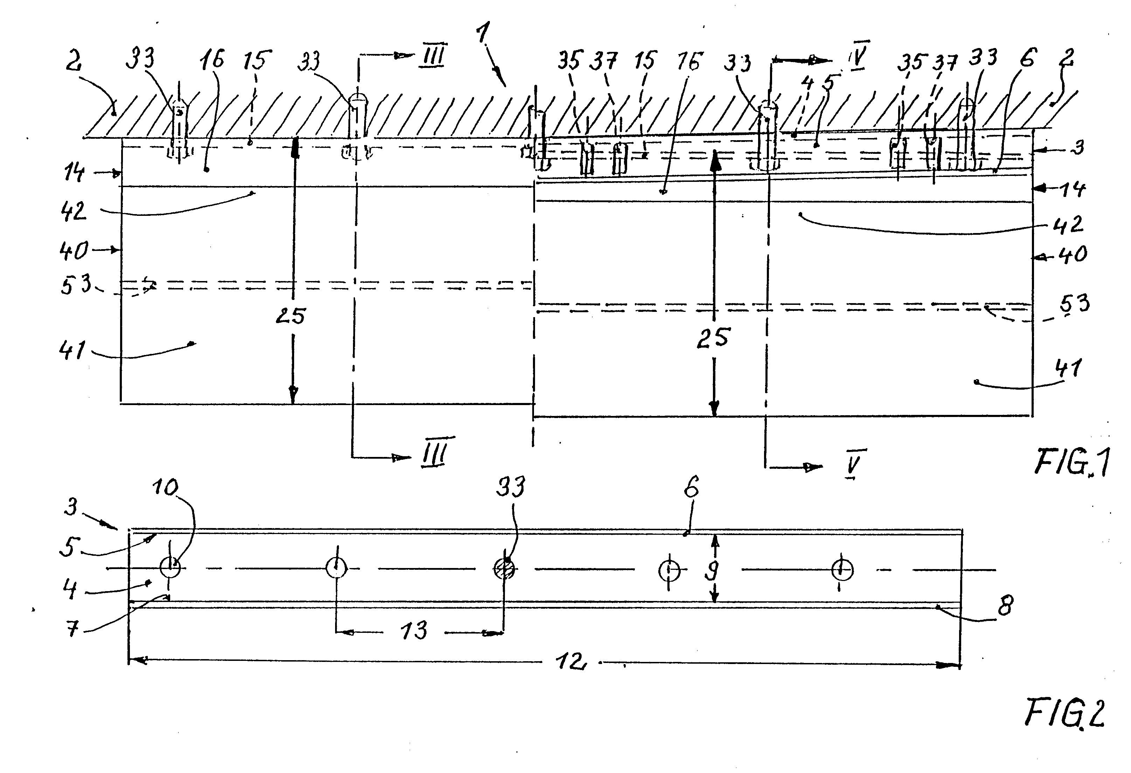

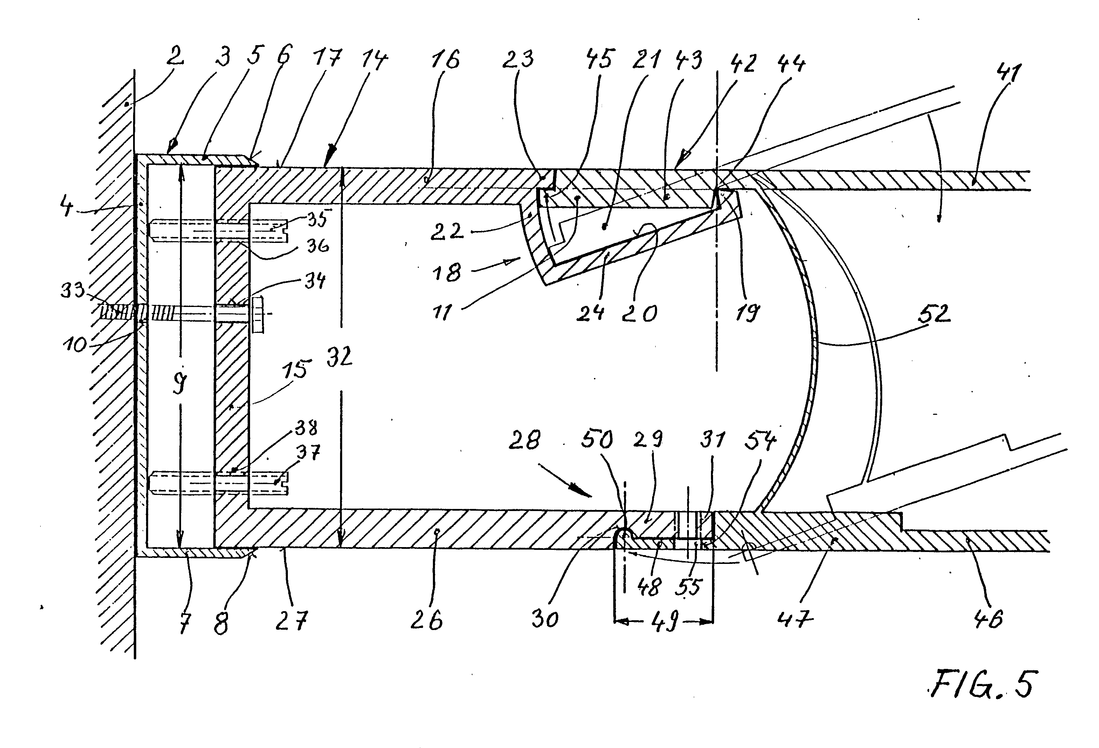

Fig. 1 zeigt in Draufsicht eine Wandablage 1 und zwar links als erstes und rechts als zweites Ausführungsbeispiel. Nachfolgend wird zunächst das erste Ausführungsbeispiel beschrieben, wobei im wesentlichen auf die Fig. 1 und die Fig. 5 Bezug genommen wird.

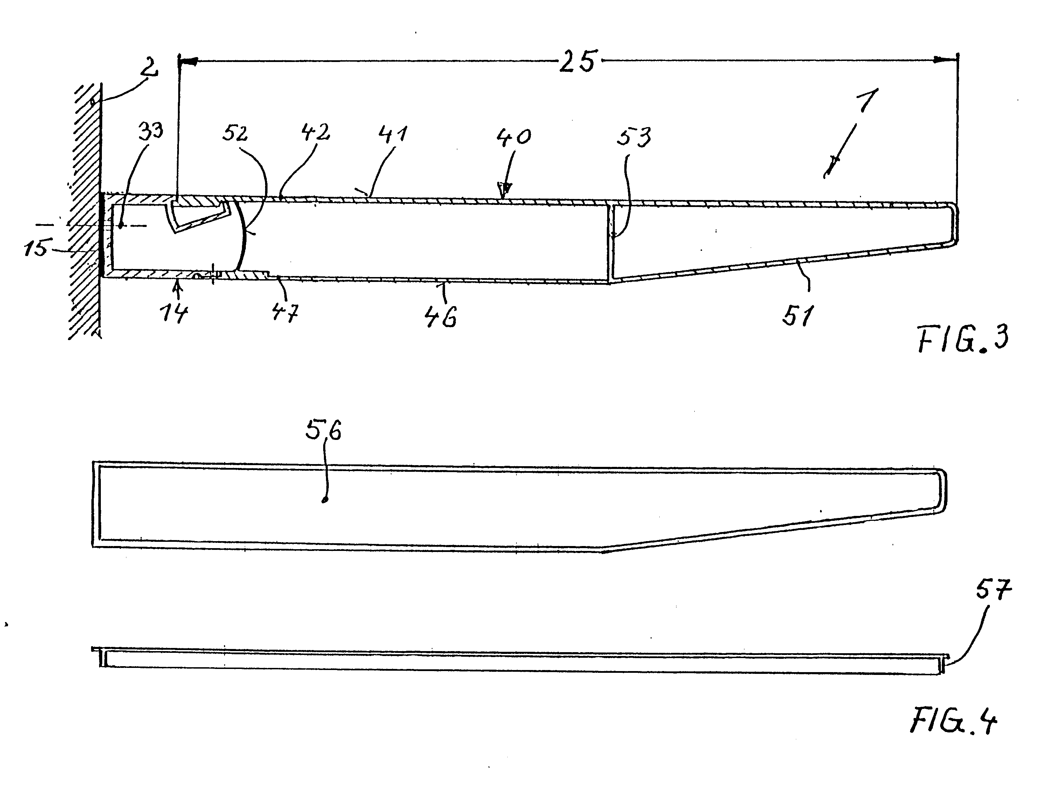

An einer Wand 2 ist mittels Befestigungsschrauben 33 eine Ablageanschlußleiste 14 befestigt, deren Querschnitt in Fig. 5 dargestellt ist. Im Boden 15 der Ablageanschlußleiste 14 sind Durchstecklöcher 34 für die Befestigungsschrauben 33 vorgesehen. In vereinfachter Darstellung ist die Ablageanschlußleiste 14 in Fig. 3 dargestellt. Ihr Boden 15 liegt an der im wesentlichen ebenen Wand 2 an. Im rechten Winkel schließen an den Boden 15 eine obere Wand 16 mit einem Endbereich 17 und einem vorderen Bereich 18 sowie eine untere Wand 26 mit einem Endbereich 27 und einem vorderen Bereich 28 an. Der vordere Bereich 18 der oberen Wand 16 weist ein Schwenkgehäuse 21 auf, welches durch einen schräg ansteigenden Boden 24 mit einer Innenwand 20 und einer Rückwand 22 gebildet wird.

Die obere Wand 16 steht um die Breite einer Anschlagleiste 23 gegenüber der Rückwand 22 vor. Das in Fig. 5 rechte Ende des Bodens 24 endet in einem Ansatz mit einer Drehkante 19.

Der vordere Bereich 28 der unteren Wand 26 besteht im wesentlichen aus einer Anschlagleiste 29 mit einer Aufnahmenut 30 und einem Gewindeloch 31.

Der vordere Bereich 18 bildet das eine Teil eines Drehgelenkes, wohingegen der vordere Bereich 28 der unteren Wand 26 ein Teil einer Rastverbindung bildet.

Mittels dieser Dreh- bzw. Rastverbindungen können an die Ablageanschluß leiste 14 Ablagen 40 mit unverschiedlichen Auslagen 25 angeschlossen werden. Diese bestehen aus einer oberen Wand 41 und einer unteren Wand 46. Zwischen beiden Wänden erstreckt sich ein Längsholm 53, von dem ab die untere Wand 46 in ihrem vorderen Bereich 51 nach oben ansteigt, wodurch die Ablage 40 vor dem Längsholm 53 sich verjüngt. Die Ablage 40 ist vorne, wie dieses die Fig. 3 zeigt, geschlossen.

Der hintere Bereich 42 der oberen Wand 41 und der hintere Bereich 47 der unteren Wand 46 sind über eine gewölbte Rückwand 52 miteinander verbunden. Unterhalb des hinteren Bereiches 42 der oberen Wand 41 der Ablage ist gemäß Fig. 5 eine Leiste 43 vorgesehen, die in einer Anschlagkante 45 endet, welche im montierten Zustand gegen die Anschlagleiste 23 der Ablageanschlußleiste 14 anliegt. Im Übergang von der oberen Wand 41 zur Leiste 43 ist eine Schwenkkante 44 vorgesehen, die mit der Drehkante 19 zusammenwirkt.

Der hintere Bereich 47 der unteren Wand 46 der Ablage 40 ist breiter als die untere Wand 46 und endet in einer Klemmzunge 48 mit einer Breite 49. Die Klemmzunge 48 endet in einem Klemmwulst 50, der im montierten Zustand in die Aufnahmenut 30 im vorderen Bereich 28 der Ablageanschlußleiste 14 hineinpaßt. In das Gewindeloch 31 in der Anschlagleiste 29 paßt, wie dieses die Fig. 5 erkennen läßt, eine Befestigungsschraube 55 hinein, mit welcher sich die Ablage 40 an der Ablageanschlußleiste 14 festsetzen läßt. Der Kopf der Befestigungsschraube 55 sitzt in einem Durchsteckloch 54.

Nachdem die Ablageanschlußleiste 14 mittels der Befestigungsschrauben 33 an einer ebenen Wand 2 befestigt ist, kann die Ablage 40 leicht mittels des Drehgelenkes 19, 44 und der Rastverbindung 30, 48, 50 an die Ablageanschlußleiste 14 angeschlossen werden. Hierzu wird der hintere Bereich 42 der oberen Wand 41 ,wie dieses mit dünn gestrichelten Linien angedeutet ist, in das Schwenkgehäuse 21 eingefügt, so daß die Schwenkkante 44 an der Drehkante 19 anliegt. Der hintere Bereich 47 der unteren Wand 46 der Ablage 40 nimmt dann die ebenfalls mit dünnen Linien dargestellte Position ein. Hieraufhin wird die Ablage 40 um das Drehgelenk 19/44 herum in Richtung der drei nicht bezeichneten Pfeile verschwenkt, bis die Klemmwulst 50 in der Aufnahmenut 30 einrastet. Um diese Anschlußverbindung zwischen der Ablageanschlußleiste 14 und der Ablage 40 zu sichern, werden dann die Befestigungsschrauben 55 eingesetzt und angezogen.

Fig. 1 rechts zeigt ein zweites Ausführungsbeispiel der Erfindung durch das es möglich ist, die Ablage 40 auch gerade an einer schräg verlaufenden Wand 2 anzubringen. Hierzu ist eine Ausgleichsleiste 3 mit einem Boden, einem oberen Schenkel 5 und einem unteren Schenkel 7 vorgesehen. Die äußeren Kanten der oberen und unteren Schenkel 5 und 7 weisen Fasen 6 bzw. 8 auf. Die Ausgleichsleiste 3 besitzt eine Öffnungsweite 9 zwischen ihrem oberen Schenkel 5 und dem unteren Schenkel 7.

Gemäß Fig. 2 weist sie eine Länge 12 und eine Ausladung 25 auf. Im Abstand 13 sind entlang einer Linie, die auf der Mittellinie der Ausgleichsleiste 3 bzw. parallel zu dieser Mittellinie liegt, Durchstecklöcher 10 für die Befestigungsschrauben 33 vorgesehen.

Wird eine Wandablage 1 mit Ausgleichsleiste 3 verwendet, sind im Boden 15 der Ablageanschlußleiste 14 obere Schraublöcher 36 bzw. untere Schraublöcher 38 für obere Justierschrauben 35 bzw. Justierschrauben 37 vorgesehen. Wie dieses die Fig. 5 erkennen läßt, lassen sich die Justierschrauben 35 und 37 innerhalb ihrer Schraublöcher 36 und 38 verstellen, so daß die unteren Bereiche der Justierschrauben 35, 37 auf dem Boden 4 der Ausgleichsleiste 3 aufliegen. Die Draufsicht in Fig. 1 rechts läßt erkennen, wie trotz der Schräglage der Wand 2 mittels der Justierschrau ben 35, 37 eine Einjustierung der Ablageanschlußleiste 14 erfolgen kann derart, daß die Anbringung der Ablage 40 in ordnungsgemäßer Weise gerade erfolgen kann.

Die Ablageanschlußleiste 14 weist zwischen dem Endbereich 17 der oberen Wand 16 und dem Endbereich 27 der unteren Wand 26 eine Einsteckhöhe 32 auf, die der Öffnungsweite 9 der Ausgleichsleiste 3 entspricht. Das Ende der Ablageanschlußleiste 14 kann demnach dicht aber justierbar in die Ausgleichsleiste 3 eingesteckt werden.

In beiden Ausführungsbeispielen ist der hintere untere Bereich 11 der oberen Wand 41 der Ablage 40 so ausgebildet, daß bei seinem Einfügen in das Schwenkgehäuse 21 das Drehgelenk 19/44 wirksam wird.

Die vorstehende Beschreibung und die Figuren lassen erkennen, daß alle zwei bzw. drei Bestandteile der Wandablage 1, nämlich die Ablageanschlußleiste 14, die Ablage 40 und die Ausgleichsleiste 3 aus Metall oder Kunststoff stranggepreßt werden können. Hierdurch ist es möglich, die Bestandteile der Wandablage 1 in jeder beliebigen Länge und Ausladung zur Verfügung zu stellen.

Fig. 4 zeigt Blenden 56 in linker bzw. rechter Ausführung, die mittels Steckfedern 57 seitlich in die Ablage 40 hineingesteckt werden können. Gegebenenfalls müssen in den Steckfedern Aussparungen vorgesehen sein für den Längsholm 53 bzw. die gewölbte Rückwand 52 sowie den vorderen Bereich 18 der oberen Wand 16 der Ablageanschlußleiste 14.

Liste der verwendeten Bezeichnungen

1 Wandablage
2 Wand
3 Ausgleichsleiste
4 Boden
5 oberer Schenkel
6 Fase
7 unterer Schenkel
8 Fase
9 Öffnungsweite
10 Durchsteckloch
11 hinterer,unterer Bereich
12 Länge
13 Abstand
14 Ablageanschlußleiste
15 Boden
16 obere Wand
17 Endbereich
18 vorderer Bereich
19 Drehkante
20 Innenwand
21 Schwenkgehäuse
22 Rückwand
23 Anschlagleiste
24 Boden
25 Ausladung
26 untere Wand
27 Endbereich
28 vorderer Bereich
29 Anschlagleiste
30 Aufnahmenut
31 Gewindeloch
32 Einsteckhöhe
33 Befestigungsschraube
34 Durchsteckloch
35 obere Justierschraube



36 Schraubloch
37 untere Justierschraube
38 Schraubloch
39
40 Ablage
41 obere Wand
42 hinterer Bereich
43 Leiste
44 Schwenkkante
45 Anschlagkante
46 untere Wand
47 hinterer Bereich
48 Klemmzunge
49 Breite
50 Klemmwulst
51 vorderer Bereich
52 gewölbte Rückwand
53 Längsholm
54 Durchsteckloch
55 Befestigungsschraube
56 Blende
57 Steckfeder

**Ansprüche**

1. Wandablage, vorzugsweise für Badezimmer, Toiletten bzw. Urinale o.dgl., gekennzeichnet durch eine fest mit einer Wand (2) verbindbare, im wesentlichen U-förmige Ablageanschlußleiste (14, 15, 16, 26) und eine leicht lösbar mittels einer Rastverbindung (30, 48, 50) damit verbindbare Ablage (40) beliebiger Ausladung (25), die als doppelwandiger, wenigstens vorn gesch lossener Kastenträger ausgegbildet ist.

2. Wandablage nach Anspruch 1, dadurch gekennzeichnet, daß der Boden (15) der Ablageanschlußleiste (14) mittels Befestigungsschrauben (33) an der Wand (2) befestigt ist, die in einer waagerechten Linie auf der oder parallel zu der Mittellinie des Bodens (15) angeordnet sind.

3. Wandablage nach den Ansprüchen 1 und 2, dadurch gekennzeichnet, daß der vordere Bereich (18) der oberen Wand (16) der Ablageanschlußleiste (14) und der hintere Bereich (42) der oberen Wand (41) der Ablage (40) als einander entsprechende leistenförmige Teile der Dreh- und Schwenkkante (19, 44) ausgebildet sind.

4. Wandablage nach den Ansprüchen 1 bis 3, dadurch gekennzeichnet, daß der vordere Bereich (28) der unteren Wand (26) der Ablageanschlußleiste (14) und der hintere Bereich (47) der unteren Wand (46) der Ablage (40) als einander entsprechende leistenförmige Teile der Rastverbindung (30, 48, 50) ausgebildet sind.

5. Wandablage nach den Ansprüchen 1 bis 4, dadurch gekennzeichnet, daß die Ablage (40) zur Ablageanschlußleiste (14) hin mit einer nach innen gewölbten Rückwand (52) abschließt.

6. Wandablage nach den Ansprüchen 1 bis 5, dadurch gekennzeichnet, daß die Ablage (40) einen parallel zur Wand (2) verlaufenden Längsholm (53) aufweist, bis zu dem die oberen und unteren Wände (41, 46) parallel zueinander verlaufen und von dem ab der vordere Bereich (51) der unteren Wand (46) schräg nach oben verläuft.

7. Wandablage nach den Ansprüchen 1 bis 6, dadurch gekennzeichnet, daß der vordere Bereich (18) der oberen Wand (16) der Ablageanschlußleiste (14) eine Drehkante (19) einschließt, die als Abschluß der Innenwand (20) der als Schwenkgehäuse (21) ausgebildeten und im Winkel abgesenkten Rückwand (22) der Ablageanschlußleiste (14) ausgebildet ist.

8. Wandablage nach Anspruch 7, dadurch gekennzeichnet, daß die Rückwand (22) des Schwenkgehäuses (21) bogenförmig ausgebildet ist.

9. Wandablage nach den Ansprüchen 7 und 8, dadurch gekennzeichnet, daß der vordere Bereich (18) der oberen Wand (16) der Ablageanschlußleiste (14) über die bogenförmige Rückwand (22) des Schwenkgehäuses (21) vorsteht.

10. Wandablage nach den Ansprüchen 1 bis 9, dadurch gekennzeichnet, daß der hintere Bereich (42) der oberen Wand (41) der Ablage (40) mit einer Leiste (43) versehen ist, deren Schwenkkante (44) zur oberen Wand (41) als Gegenstück zur Drehkante (19) an der Ablageanschlußleiste (14) ausgebildet ist, und deren hinterer, unterer Bereich (11) zur Wand (2) hin als Anschlagkante (45) für die Anschlagleiste (23) an der Ablageanschlußleiste (14) ausgebildet ist.

11. Wandablage nach den Ansprüchen 1 bis 10, dadurch gekennzeichnet, daß der hintere Bereich (47) der unteren Wand (46) der Ablage (40) als Klemmzunge (48) mit einem Klemmwulst (50) ausgebildet ist.

12. Wandablage nach den Ansprüchen 1 bis 11, dadurch gekennzeichnet, daß der vordere Bereich (28) der unteren Wand (26) der Ablageanschlußleiste (14) eine um die Breite der Klemmzunge (48,49) reduzierte Anschlagleiste (29) mit einer Aufnahmenut (30) für den Klemmwulst (50) ausgebildet ist.

13. Wandablage nach den Ansprüchen 1 bis 12, dadurch gekennzeichnet, daß in der Anschlagleiste (29) Gewindelöcher (31) und in der Klemmzunge (48) Durchstecklöcher (54) für die Befestigungsschrauben (55) vorgesehen sind.

14. Wandablage nach den Ansprüchen 1 bis 13, gekennzeichnet durch eine U-förmig ausgebildete Ausgleichsleiste (3, 4, 5, 6), die mit ihrem Boden (4) ausgleichend an der Wand (2) aufliegt und deren von der Wand wegweisenden waagerecht verlaufenden Schenkel (5, 7) eine Öffnungsweite (9) aufweisen, die der Einsteckhöhe (32) der Ablageanschlußleiste (14) derart entspricht, daß ihr Boden (15) und die an diesem anschließenden Endbereiche (17, 27) der oberen und unteren Wände (16, 26) dicht aber justierbar hineinpassen.

15. Wandablage nach Anspruch 14, dadurch gekennzeichnet, daß im Boden (4) der Ausgleichsleiste (3) Durchstecklöcher (10) vorgesehen sind, durch die die Befestigungsschrauben (33) hindurchragen und daß oberhalb und unterhalb der Linie für die Befestigungsschrauben (33) im Boden (15) der Ablageanschlußleiste (14) Schraublöcher (36, 38) für Justierschrauben (35, 37) vorgesehen sind, deren Enden auf dem Boden (4) der Ausgleichsleiste (3) aufstehen.

16. Wandablage nach den Ansprüchen 14 und 15, dadurch gekennzeichnet, daß die vorderen Kanten des oberen und unteren Schenkels (5, 7) als Fase (6, 8) ausgebildet sind.

17. Wandablage nach einem oder mehreren der vorangehenden Ansprüche, dadurch gekennzeichnet, daß ihre zwei bzw. drei Bestandteile Ablageanschlußleiste (14), Ablage (40) und Ausgleichsleiste (3) aus Metall oder Kunststoff stranggepreßt sind.

18. Wandablage nach den Ansprüchen 1 bis 17, dadurch gekennzeichnet, daß als seitliche Abschlüsse Blenden (56) vorgesehen sind, die mittels Steckfedern (57) in die Ablage (40) einsteckbar sind.

FIG. 1

FIG. 2

EP 0 360 196 A1

EP 0 360 196 A1

2

25

33  52  42  41  40  53

1

15

14  47  46  51

**FIG.3**

56

57

**FIG.4**

FIG.5

EP 0 360 196 A1

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | US-A-3 809 035  (GROSSMAN)<br>* Figuren 1-3; Zusammenfassung *<br>--- | 1 | A 47 B   96/06<br>A 47 K    1/09 |
| A | US-A-3 604 670  (REEVES)<br>* Figuren 1-3; Zusammenfassung *<br>--- | 1 | |
| A | DE-U-8 603 985  (FEDER)<br>* Figuren 3,4; Seite 10, Absatz 3;<br>Seite 11 *<br>--- | 1 | |
| A | FR-A-2 031 628  (CUIVRE ET ALLIAGES)<br>* Figuren 1,2 *<br>----- | 1,11,12 | |

RECHERCHIERTE
SACHGEBIETE (Int. Cl.5)

A 47 B
A 47 F
A 47 G
A 47 K
F 16 B

Der vorliegende Recherchenbericht wurde für alle Patentansprüche erstellt

| Recherchenort | Abschlußdatum der Recherche | Prüfer |
|---|---|---|
| DEN HAAG | 30-11-1989 | NOESEN R.F. |

EPO FORM 1503 03.82 (P0403)